# EUROPÄISCHE PATENTSCHRIFT

(11) **EP 0 484 841 B1**
(45) Veröffentlichungstag und Bekanntmachung des Hinweises auf die Patenterteilung: **22.02.1995**
(21) Anmeldenummer: 91118712.8
(22) Anmeldetag: 04.11.1991
(51) Int. Cl.: B29C 47/16, B29C 47/14

(54) **Extrusionsdüse zur Herstellung flacher Bahnen aus thermoplastischem Kunststoff**
Extrusion die for manufacturing flat webs of thermoplastic material
Filière d'extrusion pour la fabrication de bandes planes en matière thermoplastique

(30) Priorität: 05.11.1990 DE 9015187 U
(43) Veröffentlichungstag der Anmeldung: 13.05.1992
(73) Patentinhaber: Röhm GmbH, 64293 Darmstadt (DE)
(72) Erfinder: Gross, Heinz, Dr.-Ing., W-6101 Rossdorf 1 (DE); Lorenz, Hans, W-6100 Darmstadt (DE); Funk, Karl, W-6103 Griesheim (DE)

(56) Entgegenhaltungen:
- EP-A- 0 040 672
- EP-A- 0 367 022
- EP-A- 0 390 578
- DE-B- 1 202 973
- NL-A- 6 805 041
- US-A- 3 694 119

## Beschreibung

Die Erfindung betrifft eine Extrusionsdüse zur Herstellung flacher Bahnen größerer Dicke aus thermoplastischem Kunststoff; sie werden auch als Breitschlitzdüsen bezeichent.

### Stand der Technik

Zur Extrusion dünner Folien werden Breitschlitzdüsen ohne Staubalken, jedoch mit elastischen Austrittslippen, sog. "Flexlippen", verwendet. Durch ihre Elastizität lassen sie eine Dickenveränderung des Strömungskanals der thermoplastischen Kunststoffschmelze vom Verteilerkanal bis zu den Austrittslippen um bis zu etwa einem halben Millimeter zu. Man verwendet dazu eine Mehrzahl von Stellschrauben oder thermischen Dehnbolzen, die auf die elastische Lippe einwirken. Bei einer Dicke der extrudierten Folienbahn unter 2 mm reicht ein Stellhub von einem halben Millimeter aus, um die Schmelzeströmung an den Austrittslippen zu regulieren und eventuelle Ungleichmäßigkeiten in Querrichtung auszugleichen.

Eine Foliendüse dieser Art ist aus NL-A 68 05041 bekannt. Zur Vermeidung von Ansetzungen der Formmasse an den Düsenlippen sind diese unmittelbar an der Mündung geringfügig erweitert. Diese Erweiterung liegt erkennbar in einer Größenordnung von Bruchteilen eines Millimeters und hat keinen feststellbaren Einfluß auf die Dicke der extrudierten Folie.

Gemäß dem deutschen Gebrauchsmuster G 88 13 801 läßt man die Stellkraft über eine Mehrzahl von beweglich angeordneten Lamellen auf die elastische Lippe einwirken. Dadurch wird eine bessere Feineinstellung, beispielsweise zur Wulstgrößeneinstellung an einem nachfolgenden Walzenglättwerk möglich, jedoch bleibt der Stellhub in einer Größenordnung, die der Extrusion von dünnen Folienbahnen angepaßt ist.

Zur Extrusion von thermoplastischen Kunststoffen zu Plattenbahnen mit einer Dicke von mehr als 2 mm werden im allgemeinen Breitschlitzdüsen mit Staubalken verwendet. Man versteht darunter einen zwischen dem Verteilerkanal und den Austrittslippen in den Staubereich der Düse hineinragenden Balken, der in einer Nut verschiebbar angeordnet ist und durch geeignete Stellmittel unterschiedlich tief in den Schmelzestrom eingesenkt werden kann. Auf diese Weise lassen sich auch Schmelzeströme von erheblicher Dicke regulieren.

Mit der Anwendung eines Staubalkens ist eine Reihe von Nachteilen verbunden. Er muß gesondert hergestellt und in die dafür vorgesehene Nut genau eingepaßt werden. Das Eindringen der Kunststoffschmelze in den Spalt zwischen der Nutwandung und dem Staubalken muß durch Dichtungsstreifen verhindert werden, was wegen der schwer erfüllbaren Materialanforderungen an das Dichtungsmittel nur bedingt möglich ist. Aus konstruktiven Gründen muß der Staubalken in einem erheblichen Abstand von den Düsenlippen liegen, wo die Schmelze noch unter einem sehr hohen Druck steht. Er muß deshalb sehr steif ausgelegt werden, so daß er zu einer Feinsteuerung über die Düsenbreite nur bedingt geeignet ist. Die erforderlichen Stellkräfte sind erheblich. Der starke Druckabfall der Schmelze vom Bereich des Staubalkens bis zu den Austrittslippen kann zu Querströmungen Anlaß geben, wodurch die ausgleichende Wirkung des Staubalkens teilweise wieder zunichte wird. Weiterhin sind sog. Totstellen im Schmelzekanal am Anfang und am Ende des Staubalkens schwer zu vermeiden. Dadurch können Anteile der Schmelze aufgehalten und erst nach Beginn einer thermischen Zersetzung weitergeführt werden, so daß in der erzeugten Bahn Schlieren von zersetztem Material auftreten.

### Aufgabe und Lösung

Aufgabe der Erfindung ist die Schaffung einer Extrusionsdüse, mit der auch flache Bahnen größerer Dicke aus thermoplastischem Kunststoff ohne die Nachteile, die mit der Anwendung eines Staubalkens verbunden sind, hergestellt werden können.

Die gestellte Aufgabe wird erfindungsgemäß durch eine Extrusionsdüse nach Patentanspruch 1 gelöst.

Zweck mäßige Weiterbildungen der Erfindung ergeben sich aus den abhängigen Ansprüchen 2 bis 5.

Ein Ausführungsbeispiel der Erfindung ist in der Zeichnung dargestellt und wird im folgenden näher beschrieben.

Es zeigen
- Fig. 1: eine Extrusionsdüse gemäß der Erfindung
und
- Fig. 2: zum Vergleich eine herkömmliche Breitschlitzdüse mit Staubalken
Gegenstand der Erfindung ist eine Extrusionsdüse 1 zur Herstellung flacher Bahnen größerer Dicke aus thermoplastischem Kunststoff, enthaltend einen Eintrittskanal 2 für die thermoplastische Kunststoffschmelze, einen Verteilerkanal 3, ein Paar Austrittslippen 4,5 und einen zwischen dem Verteilerkanal und den Austrittslippen angeordneten Staubereich 6. Wenigstens eine Wand des Staubereichs 6 ist als elastische Lippe 7 in der Weise durch Stellmittel 8 verstellbar ausgebildet, daß sich die Dicke D und der Abstand A gleichzeitig durch Betätigen der Stellmittel verändern lassen.

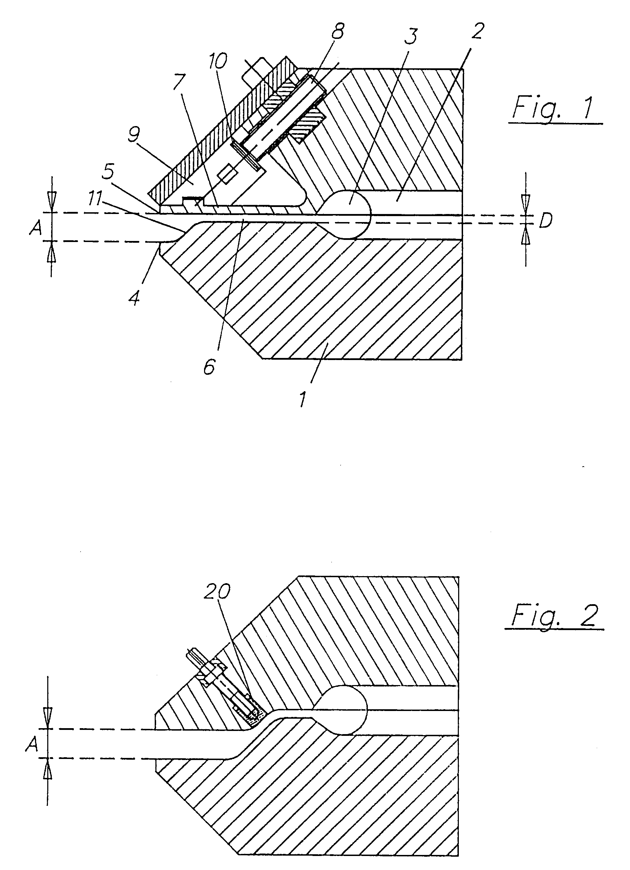

Erfindungsgemäß betragen die Dicke D des Staubereichs 1 bis 4 mm und der formgebende Abstand A der Austrittslippen (4,5) 3 bis 40 mm. Der Abstand A der Austrittslippen ist mehr als zwei bis zehn mal größer als die Dicke D des Staubereichs. Es war überraschend, daß die gestellte Aufgabe durch technische Mittel lösbar war, die in ähnlicher Weise, aber zu einem ganz anderen Zweck, bisher nur bei Düsen zur Extrusion dünner Folien bekannt waren.

### Vorteil der Erfindung

Der Staubereich 6 hat eine so geringe Dicke D, daß der Stellhub der elastischen Lippe 7 zur Steuerung und Feinregulierung des Schmelzestromes ausreicht. Im Bereich der Austrittslippen sammelt sich die aus dem Staubereich 6 austretende Schmelze und die Dicke des Stranges nimmt auf die Sollstärke A zu. Die Geschwindigkeit des Stranges nimmt im umgekehrten Verhältnis ab, wie die Strangdicke zunimmt. Ein Staubalken ist zur Steuerung des Schmelzestromes nicht mehr erforderlich und vorzugsweise nicht vorhanden. Dadurch entfallen alle Nachteile, die mit dem Staubalken verbunden sind. Die höhere Flexibilität der Lippe 7 erlaubt eine viel feinere Steuerung des Schmelzestromes in eng begrenzten Breitenbereichen als es mit einem Staubalken möglich wäre. Der Druckverlust ist nach dem Austritt aus dem Staubereich 6 so gering, daß Querströmungen, die die Gleichmäßigkeit des Schmelzestromes beeinträchtigen könnten, nicht auftreten. Das trifft insbesondere dann zu, wenn das stromabwärtige Ende des Staubereichs nicht weiter als das Doppelte des Abstands A von den Austrittslippen 4,5 entfernt ist.

Im gesamten Strömungsbereich der Düse 1 fließt die Schmelze an glatten, undurchbrochenen Wänden, so daß es weder Totstellen noch Undichtigkeiten geben kann. Schmelzeumlenkungen, wie an Düsen mit Staublaken gebräuchlich, sind entbehrlich. Dadurch ist der konstruktive Aufbau der Düse vereinfacht und der Druckverlust im Schmelzestrom vermindert.

### Ausführung der Erfindung

Die Dicke D im Staubereich beträgt vorzugsweise 1 bis 2 mm. Der Abstand A der Austrittslippen 4,5 kann gegebenenfalls auch mehr als 3 bis 40 mm betragen. Es ist zweckmäßig, die elastische Lippe 7 bis zur formbildenden Austrittslippe 5 eben auszubilden und die Dickenzunahme am Übergang von der Stauzone 6 zur Austrittslippe 4 in Form einer geneigten Stufe 11 mit gerundeten Übergängen zu gestalten, die einen laminaren Strömungsverlauf der Schmelze begünstigt. Der Neigungswinkel der Stufe 11 gegen die gegenüberliegende Wand kann 15 bis 60° betragen. Unmittelbar vor der formbildenden Austrittslippe 4 sollten die einander gegenüberliegenden Wände des Strömungskanals parallel verlaufen. Die Länge des parallelen Austrittsbereichs (in Fließrichtung gemessen) ist in der Regel kleiner als der Abstand A der Austrittslippen. Im Extremfall kann der parallele Bereich ganz fehlen, so daß der Austrittsbereich divergent ist.

Die Länge des Staubereichs 6 kann z.B. 10 bis 100 mm betragen. Wenn der Verteilerkanal 3, wie üblich, bogenförmig ausgebildet ist, beginnt der Staubereich an dem den Lippen 4,5 nächstgelegenen Ende des Verteilerkanals. Die Länge der elastischen Lippe 7 wird so bemessen, daß sie einen Stellhub bis zu 0,5 mm ohne bleibende Verformung zuläßt. Die Feineinstellung wird in der Regel erleichtert, wenn die elastische Lippe 7 bis zur Austrittslippe 5 etwa die gleiche Dicke hat und die Stellkraft von den Stellgliedern 8 gemäß der Lehre des deutschen Gebrauchsmusters G 88 13 801 mittels beweglicher Lamellen 9 eingeleitet wird. Für spezielle Anwendungen könnteallerdings auch eine Variation der Lippendicke vorteilhaft sein.

Die Stellglieder 8, z.B. Stellbolzen, thermische Dehnbolzen oder Piezotranslatoren, wirken vorzugsweise auf ein elastisches Stahlband 10 ein. Je dichter die Stellglieder 8 angeordnet und je schmaler die Lamellen 9 sind, umso feiner regulierbar ist die Düse. Vorzugsweise sind die Stellglieder 8 in seitlichen Abständen nicht über 40 mm angeordnet und die Lamellen 1 bis 5 mm dick.

Nach dem Austritt aus den Lippen 4,5 können extrudierte Stränge bis 15 mm Dicke auf einem üblichen Walzenglättwerk weiterbehandelt werden, wobei sich die feine Regulierbarkeit der erfindungsgemäßen Düse bei der Wulstregulierung am ersten Walzenspalt vorteilhaft auswirkt. Dickere Stränge können von einem endlosen Förderband übernommen und auf diesem durch eine Kühlzone geführt werden.

Mit der neuen Extrusionsdüse können thermoplastische Kunststoffe aller Art, die sich zur Herstellung von flachen Bahnen mittlerer bis größerer Dicke eignen, extrudiert werden. Als Beispiele seien PMMA, PC, PVC, PS, Polyolefine, PA, PES, PEEK genannt. Die Kunststoffschmelze wird aus einem (in der Zeichnung nicht dargestellten) Extruder in den Eintrittskanal 2 eingespeist. Bei Verwendung eines geeigneten Adapters vor dem Eintrittskanal 2 können auch unterschiedliche Kunststoffe zu mehrschichtigen Bahnen koextrudiert werden.

## Patentansprüche

1. Extrusionsdüse (1) zur Herstellung flacher Bahnen größerer Dicke aus thermoplastischem Kunststoff, enthaltend einen Eintrittskanal (2) für die thermoplastische Kunststoffschmelze, einen Verteilerkanal (3), ein Paar Austrittslippen (4,5) und einen zwischen dem Verteilerkanal und den Austrittslippen angeordneten Staubereich (6), wobei wenigstens eine Wand des Staubereichs (6) als elastische Lippe (7) in der Weise durch Stellmittel (8) verstellbar ausgebildet ist, daß sich die Dicke D und der Abstand A gleichzeitig durch Betätigen der Stellmittel verändern lassen,
die Dicke D des Staubereichs 1 bis 4 mm und der formgebende Abstand A der Austrittslippen (4,5) 3 bis 40 mm betragen und der Abstand A mehr als zwei bis zehn mal größer als die Dicke D ist.

2. Extrusionsdüse nach Anspruch 1, wobei der Austrittsbereich über eine Länge, die geringer als der Abstand A ist, parallel begrenzt ist.

3. Extrusionsdüse nach Anspruch 1 oder 2, wobei der Austrittsbereich divergent ist.

4. Extrusionsdüse nach einem oder mehreren der Ansprüche 1 bis 3, wobei die Extrusionsdüse (1) keinen Staubalken enthält.

5. Extrusionsdüse nach einem oder mehreren der Ansprüche 1 bis 4, wobei das stromabwärtige Ende des Staubereichs nicht weiter als das Doppelte des Abstands A von den Austrittslippen (4,5) entfernt ist.

## Claims

1. An extrusion die (1) for producing thicker flat sheets made of thermoplastic plastics, comprising an inlet channel (2) for the thermoplastics plastics melt, a distribution channel (3), a pair of outlet lips (4, 5) and a baffle region (6) arranged between the distributor channel and the outlet lips, at least one wall of the baffle region (6) being in the form of a flexible lip (7) which is adjustable by adjusting means (8) in such a way that the thickness D and the distance A may be altered simultaneously by actuating the adjusting means, the thickness D of the baffle region being 1 to 4 mm and the shaping distance A between the outlet lips (4, 5) being 3 to 40 mm and the distance A being twice to ten times the thickness of D.

2. An extrusion die according to claim 1, in which the outlet region has a parallel boundary over a length which is smaller than the distance A.

3. An extrusion die according to claim 1 or 2, in which the outlet region is divergent.

4. An extrusion die according to one or more of claims 1 to 3, in which the extrusion die (1) contains no baffle beam.

5. An extrusion die according to one or more of claims 1 to 4, in which the distance of the downstream end of the baffle region from the outlet lips (4, 5) is no greater than double the distance A.

## Revendications

1. Filière d'extrusion (1) pour la fabrication de bandes planes de forte épaisseur en matière synthétique thermoplastique, comprenant un canal d'entrée (2) pour la matière synthétique thermoplastique fondue, un canal de distribution (3), une paire de lèvres de sortie (4, 5) et une zone d'accumulation (6) disposée entre le canal de distribution et les lèvres de sortie, au moins une paroi de la zone d'accumulation (6) étant réalisée sous la forme d'une lèvre élastique (7) et pouvant être réglée par un moyen de réglage (8) de telle manière que l'épaisseur D et la distance A se modifient simultanément par actionnement du moyen de réglage, l'épaisseur D de la zone d'accumulation et la distance A de mise en forme des lèvres de sortie (4, 5) ayant des valeurs respectives de 1 à 4 mm et de 3 à 40 mm et la distance A étant de plus de 2 à 10 fois supérieure à l'épaisseur D.

2. Filière d'extrusion selon la revendication 1, dans laquelle la zone de sortie est limitée parallèlement sur une longueur qui est inférieure à la distance A.

3. Filière d'extrusion selon l'une des revendications 1 ou 2, dans laquelle la zone de sortie est divergente.

4. Filière d'extrusion selon l'une quelconque des revendications 1 à 3, dans laquelle la filière d'extrusion (1) ne comprend pas de traverse de retenue.

5. Filière d'extrusion selon l'une quelconque des revendications 1 à 4, dans laquelle l'extrémité aval de la zone d'accumulation n'est pas éloignée des lèvres de sortie (4, 5) de plus du double de la distance A.
